(19) Europäisches Patentamt
European Patent Office
Office européen des brevets

(11) **EP 3 220 592 B1**

(12) **FASCICULE DE BREVET EUROPEEN**

(45) Date de publication et mention
de la délivrance du brevet:
**24.01.2018 Bulletin 2018/04**

(51) Int Cl.:
***H04L 27/26*** *(2006.01)*

(21) Numéro de dépôt: **17160463.0**

(22) Date de dépôt: **13.03.2017**

(54) **MÉTHODE DE SYNCHRONISATION D'UN SYSTÈME FBMC AU MOYEN D'UN CANAL RACH**

VERFAHREN ZUM SYNCHRONISIERUNG EINES FBMC SYSTEMS DURCH ANWENDUNG EINES RACH-KANALS

METHOD OF SYNCHRONISING AN FBMC SYSTEM BY MEANS OF AN RACH CHANNEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.03.2016 FR 1652109**

(43) Date de publication de la demande:
**20.09.2017 Bulletin 2017/38**

(73) Titulaire: **Commissariat à l'Energie Atomique et aux Energies Alternatives**
**75015 Paris (FR)**

(72) Inventeur: **CASSIAU, Nicolas**
**38960 SAINT ETIENNE DE CROSSEY (FR)**

(74) Mandataire: **Brevalex**
**56, Boulevard de l'Embouchure**
**B.P. 27519**
**31075 Toulouse Cedex 2 (FR)**

(56) Documents cités:
**EP-A1- 2 879 341 WO-A1-95/03656**

• **BERG VINCENT ET AL: "A flexible FS-FBMC receiver for dynamic access in the TVWS", 2014 9TH INTERNATIONAL CONFERENCE ON COGNITIVE RADIO ORIENTED WIRELESS NETWORKS AND COMMUNICATIONS (CROWNCOM), ICST, 2 juin 2014 (2014-06-02), pages 285-290, XP032616069, DOI: 10.4108/ICST.CROWNCOM.2014.255866**
• **M Bellanger ET AL: "FBMC Physical Layer: a Primer", , 27 mai 2010 (2010-05-27), pages 1-31, XP055239692, Extrait de l'Internet: URL:http://www.ict-phydyas.org/teamspace/internal-folder/FBMC-Primer_06-2010.pdf [extrait le 2016-01-08]**

**Description**

## DOMAINE TECHNIQUE

La présente invention concerne de manière générale le domaine des systèmes de télécommunication utilisant une modulation multi-porteuse à banc de filtres, encore dénommés systèmes FBMC (Filter Bank Multi-Carrier).

## ÉTAT DE LA TECHNIQUE ANTÉRIEURE

Les systèmes de télécommunication utilisant une modulation multi-porteuse sont bien connus dans l'état de la technique. Le principe d'une telle modulation consiste à diviser la bande de transmission en une pluralité de sous-canaux fréquentiels associés à des sous-porteuses et à moduler chacune de ces sous-porteuses par les données à transmettre.

La modulation multi-porteuse la plus répandue est sans aucun doute la modulation OFDM (Orthogonal Frequency Division Multiplexing). Toutefois, l'occupation spectrale d'un signal OFDM étant sensiblement plus importante que la bande de sous-porteuses qu'il utilise en raison de l'étalement des lobes secondaires, la modulation OFDM n'est pas une solution optimale pour des applications nécessitant de forts taux de réjection hors bande.

La modulation par banc de filtres ou FBMC (Filter Bank Multi Carrier) est une modulation multi-porteuse permettant d'obtenir une meilleure localisation spectrale dans la bande de sous-porteuses. Elle est en outre l'une des solutions possibles pour les systèmes de télécommunication de la cinquième génération.

Le principe de la modulation FBMC est basé sur une synthèse par banc de filtres à l'émission et une analyse par banc de filtres à la réception, le produit de la fonction de transfert d'un filtre à l'émission par la fonction de transfert du filtre correspondant à la réception étant égal à la fonction de transfert du filtre de Nyquist.

Les systèmes FBMC sont classiquement implémentés dans le domaine temporel. La structure d'un système FBMC implémenté dans le domaine temporel a été décrite en détail dans l'article de B. Hirosaki intitulé « An orthogonally multiplexed QAM system using the discrète Fourier transform » publié dans IEEE Trans on Comm., vol. 29 No. 7, pp. 982-989, Juillet 1981, ainsi que dans l'article de P. Siohan et al. intitulé « Analysis and design of OFDM/OQAM systems based on filterbank theory" publié dans IEEE Trans. on signal processing, vol. 50, No 5, pp. 1170-1183, Mai 2002. Les systèmes FBMC implémentés dans le domaine temporel font appel à des réseaux de filtres polyphasés d'où leur dénomination PPN-FBMC (Polyphase Network FBMC).

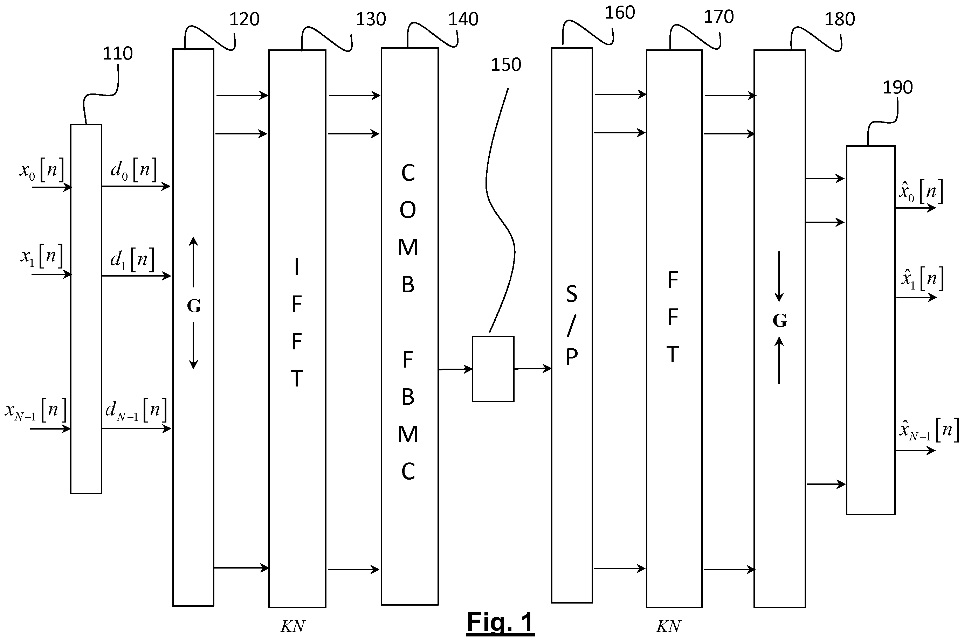

Plus récemment, il a été proposé d'implémenter un système FBMC dans le domaine fréquentiel comme décrit dans le document de M. Bellanger *et al.* intitulé « FBMC physical layer : a primer » disponible sur le site www.ict-phydyas.org. Les systèmes FBMC implémentés dans le domaine fréquentiel font appel à un étalement spectral d'où leur dénomination de FS-FBMC (Frequency Spread FBMC). Le document BERG VINCENT ET AL: "A flexible FS-FBMC receiver for dynamic access in the TVWS" divulgue une méthode de synchronisation d'un émetteur avec un récepteur d'un système FBMC. On effectue une FFT glissante du signal reçu de taille à partir d'un échantillon de départ d'indice donné, la fenêtre de la FFT glissant de N/2 échantillons entre deux FFT successives où N est le nombre de sous-porteuses d'un symbole FBMC et K est le facteur de chevauchement. La structure d'un système FS-FBMC est représentée en Fig. 1.

Au niveau de l'émetteur, les symboles de modulation QAM à transmettre avec une cadence $Nf$ avec $f=1/T$ sont regroupés par blocs de taille $N$, $x_0[n],...,x_{N-1}[n]$ où $n$ est l'indice temporel du bloc. Chaque bloc de $N$ symboles est fourni en parallèle à $N$ voies d'entrée d'un module de prétraitement, 110, dit prétraitement OQAM (Offset QAM). Ce module de prétraitement a pour fonction de démultiplexer la partie réelle et la partie imaginaire des symboles d'entrée avec une fréquence $2f$ de sorte que deux échantillons transmis au même instant sur deux sous-canaux successifs ou deux échantillons transmis en deux instants successifs sur un même sous-canal sont l'un réel et l'autre imaginaire. Chacune des $N$ voies de sortie du module de prétraitement 110 correspond à un sous-canal.

Chaque sous-canal est ensuite étalé sur un intervalle de $2K-1$ sous-porteuses adjacentes, centré sur une sous-porteuse centrale du sous-canal. Plus précisément, chaque donnée OQAM est étalée sur $2K-1$ sous-porteuses adjacentes et pondérée par la valeur (réelle) prise par la fonction de transfert du filtre de synthèse à la fréquence correspondante.

On a désigné par 120 le module d'étalement en fréquence et de filtrage par le filtre prototype. Chaque donnée OQAM $d_i[n]$ en entrée du module 120 est étalée sur $2K-1$ sous-porteuses adjacentes pour donner :

$$\breve{d}_{i,k}[n] = d_i[n]G_k \, , \; k = -K+1,...,0,..K-1 \qquad (1)$$

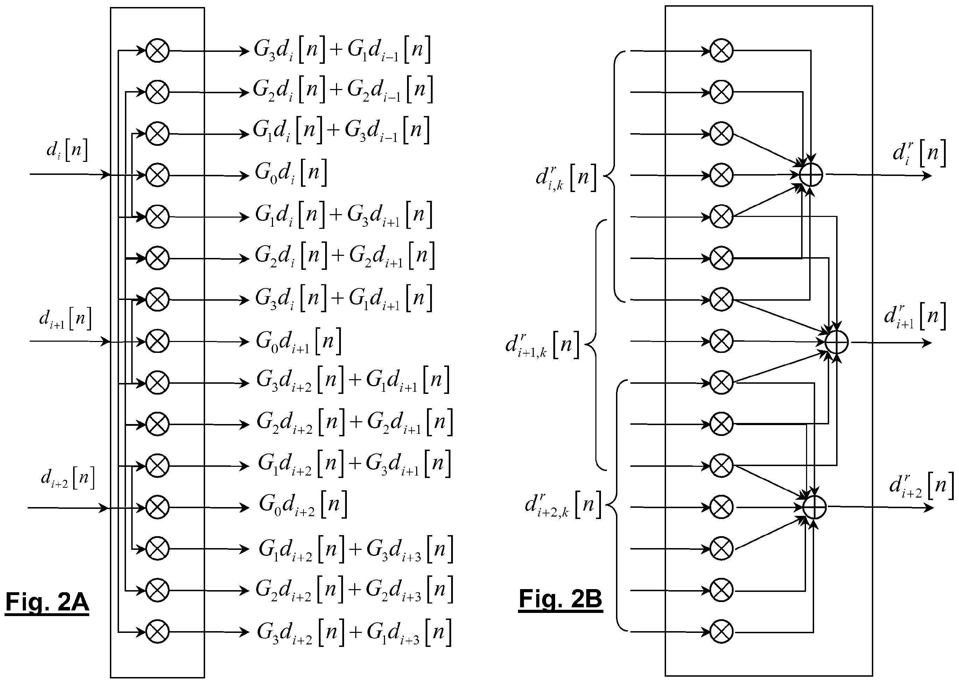

Les données de même parité $i$ et $i+2$ sont séparées spectralement et celles de parités contraires $i$ et $i+1$ se chevauchent comme représenté en Fig. 2A. Ce chevauchement n'engendre toutefois pas d'interférence puisque deux données de parités contraires sont nécessairement respectivement situées sur l'axe réel et l'axe imaginaire. Par exemple, en Fig. 2A, les données $d_i[n]$ et $d_{i+2}[n]$ sont des valeurs réelles (représentées en traits continus) alors que la donnée $d_{i+1}[n]$ est une valeur imaginaire (représentée par des traits en pointillés). L'orthogonalité dans le plan complexe est conservée par le filtrage par le filtre prototype étant donné que les coefficients $G_k$ sont réels.

Les données étalées en fréquence et filtrées font ensuite l'objet d'une IFFT de taille $KN$ en 130.

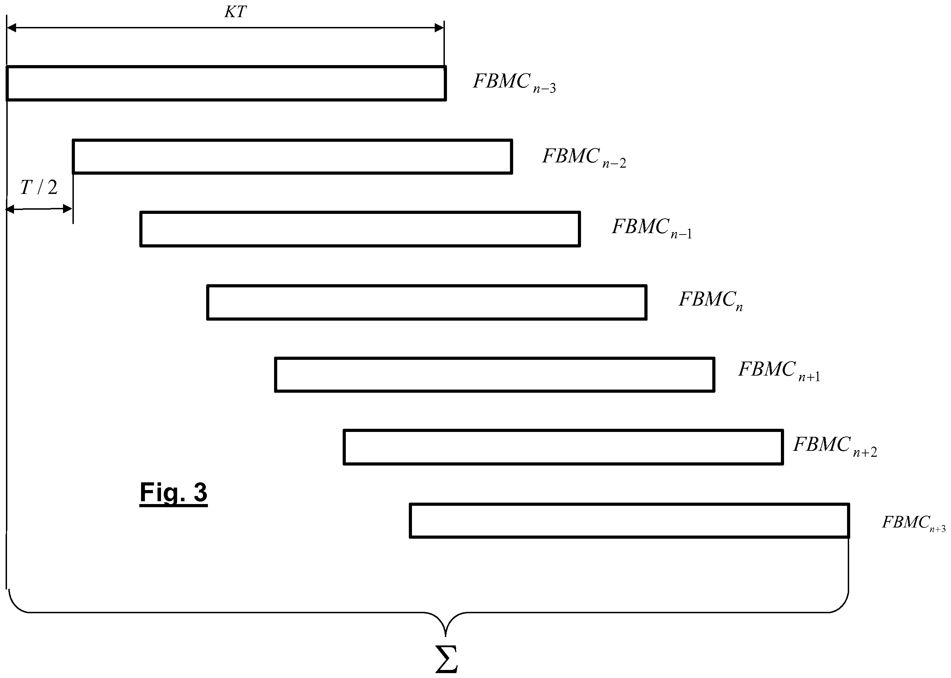

Le bloc d'échantillons temporels en sortie de la IFFT est combiné au moyen du module de combinaison 140 comme indiqué en Fig. 3. L'ensemble des échantillons en sortie de l'IFFT représente un symbole FBMC dans le domaine temporel, deux symboles FBMC successifs étant décalés de $T/2$ (autrement dit de $N/2$ échantillons). Les symboles FBMC ayant chacun une durée $KT$ (autrement dit une taille de $KN$ échantillons). Un symbole FBMC est combiné dans le module 140 avec les $K$-1 symboles FBMC précédents et $K$-1 symboles FBMC suivants. Pour cette raison $K$ est encore appelé facteur de chevauchement (*overlapping factor*) ou d'entrelacement. On notera qu'un échantillon en sortie du module de combinaison 140 est la somme de $2K$-1 échantillons de symboles FBMC consécutifs.

Le signal ainsi obtenu est ensuite translaté en bande RF.

Après transmission sur le canal 150, le signal reçu, démodulé en bande de base, est échantillonné par le récepteur à la cadence $Nf$ puis converti en blocs de taille $KN$ par le convertisseur série-parallèle 160.

Une FFT glissante (la fenêtre de la FFT glissant de $N/2$ échantillons entre deux calculs de FFT) de taille $KN$ est effectuée dans le module FFT, 170, sur des blocs de $KN$ échantillons consécutifs en sortie du convertisseur série-parallèle 160.

Les sorties de la FFT sont ensuite éventuellement égalisées (égaliseur non représenté) puis soumises à un filtrage et un désétalement spectral dans le module 180. L'opération de désétalement a lieu dans le domaine fréquentiel comme représenté en Fig. 2B. Plus précisément, les échantillons $\breve{d}_{i,k}^{r}[n]$, $k$=-$K$+1,...,0,..$K$-1 correspondant aux $2K$-1 fréquences $(i-1)K+1,...iK,...(i+1)K$-1 de la FFT sont multipliés par les valeurs de la fonction de transfert du filtre d'analyse (translatée en fréquence de celle du filtre prototype) aux fréquences en question et les résultats obtenus sont sommés, soit :

$$d_i^r[n] = \sum_{k=-K+1}^{K-1} G_k \breve{d}_{i,k}^r[n] \qquad (2)$$

On notera que, comme en Fig. 2A, l'obtention de données ayant des rangs de même parité, par exemple $d_i^r[n]$ et $d_{i+2}^r[n]$, fait appel à des blocs d'échantillons disjoints alors que ceux de deux rangs consécutifs, de parités inverses, se chevauchent. Ainsi, l'obtention de la donnée $d_{i+1}^r[n]$ fait appel aux échantillons $\breve{d}_{i,k}^r[n]$, $k$=1,..,$K$-1 ainsi qu'aux échantillons $\breve{d}_{i+2,k}^r[n]$, $k$=-$K$+1,...,1.

Le désétalement de données réelles est représenté par des traits continus alors que celui des données imaginaires est représenté par des traits en pointillés.

Les données $d_i^r[n]$ ainsi obtenues sont ensuite fournies à un module de post-traitement 190, effectuant le traitement inverse de celui du module 110, autrement dit une démodulation OQAM. Les symboles QAM sont ainsi restaurés.

La technologie FBMC est l'une des technologies candidates à la cinquième génération des systèmes de télécommunication sans fil. Les systèmes de télécommunication sans fil des troisième (UMTS) et quatrième (LTE) générations font appel à un canal montant (uplink channel) à accès aléatoire ou RACH (Random Access Channel) pour permettre à un terminal mobile ou UE (User Equipment) d'établir une connexion avec une station de base (BS ou eNodeB selon la génération).

Le canal RACH est un canal commun à l'ensemble des UEs et ceux-ci y accèdent de manière non synchronisée, généralement selon un protocole de conflit d'accès (contention based multiple access) pour transmettre l'envoi d'informations de contrôle à la station de base et se synchroniser avec elle.

Dans les systèmes LTE, la transmission sur le canal RACH utilise des préambules spécifiques occupant un intervalle de sous-porteuses à une position spécifiée par un paramètre du réseau. Un préambule contient une séquence complexe de Zadoff-Chu ayant subi un décalage d'un certain nombre d'échantillons, le décalage en question permettant à la station de base de discriminer les différents UEs.

Le but de la présente invention est de proposer une méthode de synchronisation permettant à un émetteur (au niveau d'un terminal) de se synchroniser avec un récepteur (au niveau d'une station de base) d'un système FBMC au moyen d'un canal d'accès, notamment d'un canal RACH. La présente invention propose également une structure de canal RACH permettant une mise en oeuvre de cette méthode de synchronisation.

## EXPOSÉ DE L'INVENTION

La présente invention est définie par une méthode de synchronisation d'un émetteur avec un récepteur d'un système FBMC, dans laquelle une séquence pseudo-aléatoire étant insérée, au niveau de l'émetteur, dans un canal d'accès défini par un intervalle de sous-porteuses d'une trame FBMC, ladite séquence pseudo-aléatoire présentant un décalage donné, $C_v$, par rapport à une séquence de référence à valeurs réelles, et qu'au niveau du récepteur :

(a) on effectue une FFT glissante du signal reçu de taille $KN$ à partir d'un échantillon de départ d'indice donné ($i$=0), la fenêtre de la FFT glissant de $N/2$ échantillons entre deux FFT successives où $N$ est le nombre de sous-porteuses d'un symbole FBMC et $K$ est le facteur de chevauchement ;

(b) on extrait des résultats de FFT une séquence reçue sur ledit canal et l'on corrèle la séquence reçue avec la séquence pseudo-aléatoire de référence ;

(c) on détermine le pic de corrélation entre ces deux séquences et l'on stocke en mémoire, en relation avec l'indice de l'échantillon de départ, une métrique du pic de corrélation ainsi que la position de corrélation correspondant à ce pic ;

les étapes (a),(b),(c) étant répétées pour une pluralité d'indices de l'échantillon de départ et

(d) on détermine l'indice, $i_{max}$, de l'échantillon de départ associé au pic de corrélation de métrique maximale ainsi que la position de corrélation, $j_{max}$, correspondant à ce pic de corrélation de métrique maximale ;

(e) on détermine le décalage, $\tau_{tot}^{seq}$ entre la séquence reçue et la séquence de référence à partir de l'indice $i_{max}$ et de la position de corrélation $j_{max}$, le récepteur transmettant à l'émetteur le décalage ainsi déterminé ;

(f) l'émetteur estime un retard à partir du décalage ainsi déterminé et le décalage donné, et compense ce retard à l'émission.

Selon un premier mode de réalisation, les étapes (a),(b),(c) sont répétées pour $N/2$ indices successifs de l'échantillon de départ, deux indices successifs étant séparés de 1.

Avantageusement, à l'étape (f), le retard $\tau$ est déterminé par l'émetteur à partir de $\tau = \dfrac{N}{2N_P}\left(\tau_{tot}^{seq} - C_v\right)$ où $N_p$ est le nombre de sous-porteuses de l'intervalle de sous-porteuses dudit canal d'accès.

Selon un second mode de réalisation, les étapes (a),(b),(c) sont répétées une première fois, lors d'une première passe de recherche, pour une première pluralité $\left\lceil \dfrac{N}{2P} \right\rceil$ d'indices de l'échantillon de départ, deux indices successifs étant séparés de $P$ où $P$ est un pas de quantification libellé en nombre d'échantillons, et que les étapes (a),(b),(c) sont répétées au moins une seconde fois, lors d'une seconde passe de recherche, pour une seconde pluralité $P$ d'indices dans la plage $\left[ \ell_{max}P - \dfrac{P}{2}, \ell_{max}P + \dfrac{P}{2} \right]$, où $\ell_{max}$ est un indice estimé dans la première passe de recherche.

Avantageusement, l'indice $\ell_{max}P$ est déterminé, lors de la première passe de recherche, comme celui appartenant à la première pluralité d'indices d'échantillon de départ et associé à une première valeur maximale d'une métrique du pic de corrélation $\left( A_{max}^1 \right)$ de la séquence reçue avec la séquence de référence, ladite première valeur maximale étant obtenue sur ladite première pluralité d'indices.

L'indice $i_{max}$ de l'échantillon de départ est alors déterminé, lors de la seconde passe de recherche, comme celui appartenant à la seconde pluralité d'indices d'échantillon de départ et associé à une seconde valeur maximale d'une métrique du pic de corrélation $\left( A_{max}^2 \right)$ de la séquence reçue avec la séquence de référence, ladite seconde valeur maximale étant obtenue sur ladite seconde pluralité d'indices.

On détermine alors la position de corrélation, $j_{max}$, correspondant au pic de corrélation d'amplitude maximale lors de la seconde passe de recherche.

Le décalage, $\tau_{tot}^{seq}$, entre la séquence reçue et la séquence de référence est avantageusement obtenu à partir de l'indice $i_{max}$ et de la position de corrélation $j_{max}$, tels que déterminés par la seconde passe de recherche.

$$\tau = \frac{N}{2N_p}\left(\tau_{tot}^{seq} - C_v\right)$$

Le retard $\tau$ peut être déterminé par l'émetteur à partir de où $N_p$ est le nombre de sous-porteuses de l'intervalle de sous-porteuses dudit canal d'accès.

De préférence, ladite séquence de référence est une séquence de Gold.

## BRÈVE DESCRIPTION DES DESSINS

D'autres caractéristiques et avantages de l'invention apparaîtront à la lecture de modes de réalisation préférentiels de l'invention faite en référence aux figures jointes parmi lesquelles :

La Fig. 1 représente de manière schématique un système de télécommunication FS-FBMC connu de l'état de la technique ;

La Fig. 2A illustre l'étalement spectral réalisé en amont du module IFFT de la Fig. 1 ;

La Fig. 2B illustre le désétalement spectral réalisé en aval du module FFT dans la Fig. 1 ;

La Fig. 3 illustre la combinaison des symboles FBMC dans la Fig. 1;

La Fig. 4 représente de manière schématique la structure d'un émetteur sur le canal RACH d'un système FBMC ;

La Fig. 5 illustre de manière schématique la structure d'une trame à transmettre sur le canal RACH d'un système FBMC;

La Fig. 6 représente schématiquement la structure d'un récepteur d'un système FBMC, selon un premier mode de réalisation de l'invention ;

La Fig. 7 illustre de manière schématique une trame de symboles FBMC émise et reçue sur le canal RACH ;

La Fig. 8 représente un ordinogramme d'une méthode de synchronisation d'un émetteur d'un système FBMC, selon un premier mode de réalisation de l'invention ;

La Fig. 9 représente schématiquement la structure d'un récepteur FBMC d'un système FBMC, selon un second mode de réalisation de l'invention ;

Les Figs. 10A et 10B représentent sous forme d'ordinogramme une recherche grossière et une recherche fine dans le cadre d'une méthode de synchronisation d'un émetteur d'un système FBMC, selon un second mode de réalisation de l'invention.

## EXPOSÉ DÉTAILLÉ DE MODES DE RÉALISATION PARTICULIERS

Nous considérerons dans la suite un système de télécommunication FBMC comprenant au moins une station de base et un terminal (UE). Pour se connecter à la station de base, le terminal émet un paquet de symboles FBMC sur un canal montant à accès aléatoire ou RACH.

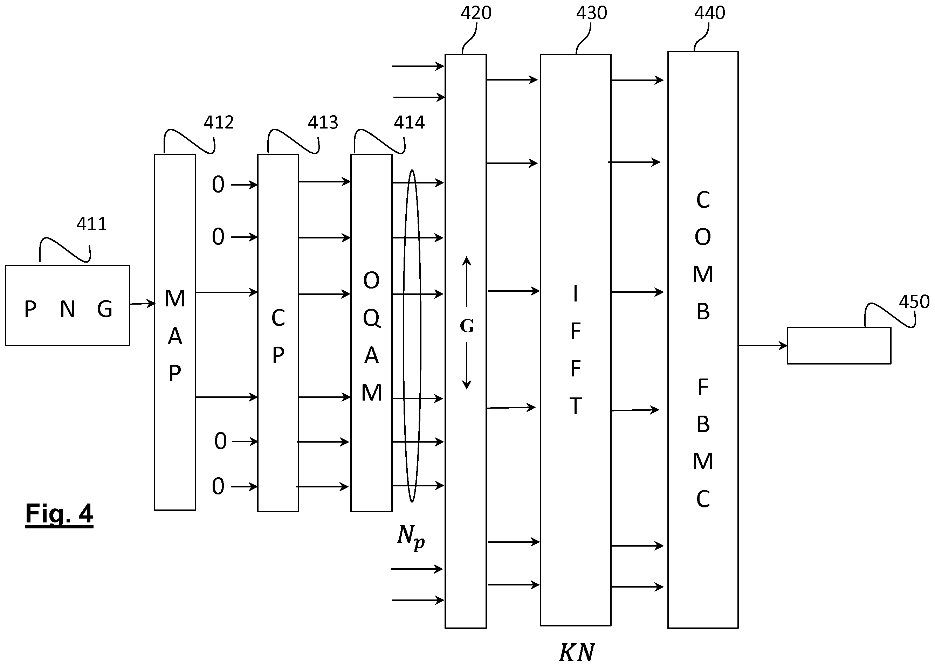

La Fig. 4 représente schématiquement la structure d'un émetteur FBMC adapté à émettre sur le canal RACH. L'émetteur est situé au niveau d'un terminal (UE). La structure de l'émetteur est similaire à celle de l'émetteur FS-FBMC représenté dans la partie gauche de la Fig. 1. Les éléments 420 à 450 sont respectivement identiques aux éléments 120 à 150 et leur description ne sera donc pas reprise ici. On ne considère ici que le canal RACH, autrement dit les symboles transmis sur ce canal. Comme cela apparaît sur la figure, d'autres symboles OQAM provenant d'autres canaux peuvent bien entendu être présents à l'entrée du module d'étalement spectral et de filtrage par le filtre prototype, 420.

Un générateur 411 génère une séquence pseudo-aléatoire à valeurs réelles présentant de bonnes propriétés d'autocorrélation et de détection de décalage. Par bonnes propriétés d'autocorrélation, on entend que la corrélation de la séquence aléatoire avec elle-même donne un pic très prononcé pour un décalage nul. Par bonnes propriétés de détection de décalage, on entend que la corrélation entre deux séquences décalées d'un décalage déterminé donne un pic très prononcé pour la valeur de ce décalage. Un exemple d'une telle séquence pseudo-aléatoire est la séquence de Gold à valeurs dans {-1,+1}.

Le générateur 411 génère la séquence pseudo-aléatoire de manière classique à l'aide d'un ou plusieurs registres à décalage rebouclés sur eux-mêmes, les prises sur un registre étant déterminées par les coefficients d'un polynôme générateur, de manière connue en soi. Dans le cas d'une séquence de Gold, la génération est effectuée au moyen de deux registres à décalage générant chacun une M-séquence (polynômes générateurs primitifs), les sorties de deux registres étant combinées entre elles au moyen d'un OU exclusif.

Chaque terminal dans la cellule est caractérisé par le décalage, noté $C_v$, de sa séquence pseudo-aléatoire par rapport à une séquence de référence (correspondant à une initialisation prédéterminée des registres à décalage). Autrement dit, chaque terminal peut être identifié par son décalage $C_v$, le terminal générant la séquence de référence avec un décalage $C_v$ d'éléments de la séquence.

La séquence générée en 411 fait ensuite l'objet d'un « mapping » sur la ressource de transmission associée au canal RACH dans le module 412. Plus précisément, les éléments de la séquence sont placés sur des sous-porteuses d'un intervalle de fréquence (chunk) voire plusieurs intervalles de fréquence alloué(s) au canal RACH pendant un intervalle de temps prédéterminé. Le module 413 concatène à la trame de symboles FBMC un préfixe cyclique CP comme décrit plus loin. Les symboles FBMC de la trame augmentée de son préfixe cyclique font ensuite l'objet d'une modulation OQAM dans le modulateur 414 avant d'être fournis au module 420. Le modulateur OQAM a pour fonction d'assurer un déphasage de $\pi/2$ entre deux échantillons consécutifs en temps et en fréquence de manière à ce que les valeurs portées au même instant par les sous-porteuses soient alternativement réelles et imaginaires et que les valeurs portées par une même sous-porteuse en des instants successifs soient aussi alternativement réelles et imaginaires.

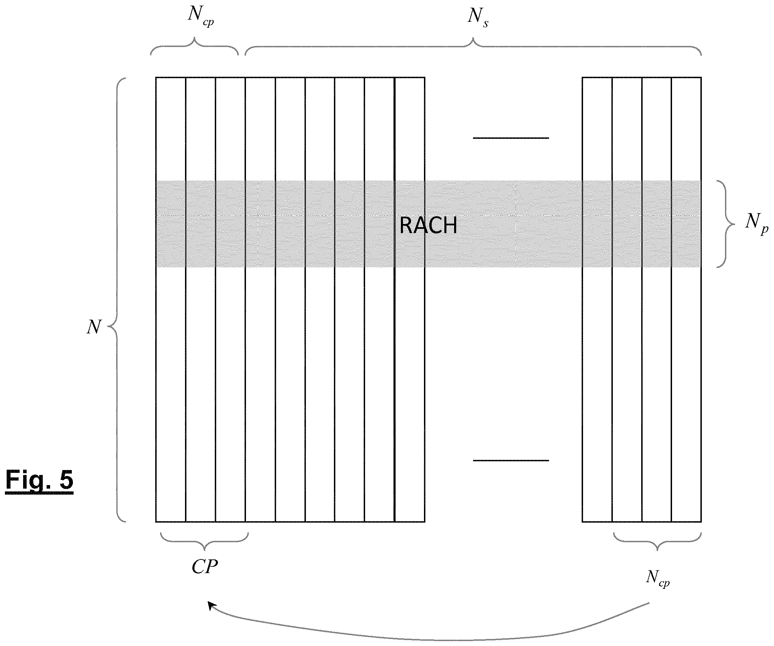

On a représenté sur la Fig. 5 une trame de symboles FBMC dans le domaine fréquentiel, destinée à être transmise sur le canal RACH par l'émetteur de la Fig. 4. L'axe horizontal représente le temps et l'axe des ordonnées représente les fréquences. Les symboles FBMC sont représentés ici avant l'étalement fréquentiel en 420. Le canal RACH occupe un intervalle de sous-porteuses qui lui est alloué, constitué de $N_p$ sous-porteuses (en toute rigueur $N_p$ sous-canaux dans la mesure où l'on se place avant étalement spectral).

Le nombre $N_s$ de symboles FBMC occupés par la séquence, avant l'ajout du préfixe cyclique, est donné par :

$$N_s = \left\lceil N_{prn}/N_p \right\rceil \qquad (3)$$

où $N_{prn}$ est la longueur de la séquence pseudo-aléatoire et $\lceil \ \rceil$ signifie la partie entière par excès. Si $N_{prn}/N_p$ n'est pas un nombre entier, on complète le dernier symbole FBMC par $N_s N_p - N_{prn}$ valeurs nulles (zero padding).

La trame de $N_s$ symboles FBMC est complétée par concaténation de $N_{cp}$ symboles OFDM obtenus en recopiant les $N_{cp}$ derniers symboles FBMC au début de la trame pour former un préfixe cyclique. Le préfixe cyclique ainsi obtenu a été désigné par *CP* sur la figure. La longueur totale de la trame est donc de $N_s + N_{cp}$ symboles FBMC.

L'ajout du préfixe cyclique est nécessaire pour absorber le temps de propagation dans la cellule. Le nombre $N_{cp}$ sera choisi de manière à ce que $N_{cp} > 2R_{max}/(cT)$ où $R_{max}$ est le rayon maximum de la cellule, $c$ la vitesse de propagation de la lumière et $T/2$ est la période d'émission des symboles FBMC.

Les symboles FBMC de la trame représentée en Fig. 5 sont soumis à étalement spectral en 420 puis à IFFT de taille *KN* en 430, conversion parallèle-série en 440 avant d'être combinés en 450.

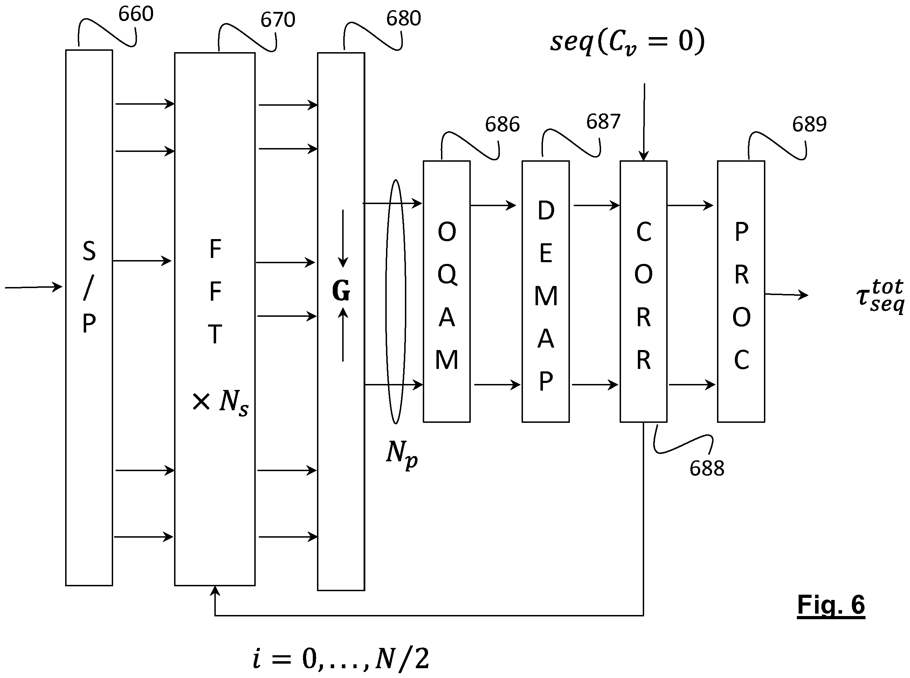

La Fig. 6 représente la structure d'un récepteur adapté à recevoir le canal RACH d'un système FBMC, selon un premier mode de réalisation de l'invention. Le récepteur se situe ici au niveau de la station de base.

La structure du récepteur est similaire à celle du récepteur FS-FBMC représenté dans la partie droite de la Fig. 1. Les éléments 660 à 680 sont respectivement identiques aux éléments 160 à 180 et leur description ne sera donc pas reprise ici. Un démultiplexeur (non représenté) en sortie du module de désétalement spectral 680 (voire en sortie du module de FFT 670) permet d'extraire les données OQAM correspondant au canal RACH. Les données ainsi extraites sont démodulées par un démodulateur OQAM 686 qui restitue les éléments de la séquence.

Un module de mise en forme 687 met bout à bout les portions de séquence acquises à chaque symbole FBMC de la trame. L'acquisition est effectuée pour $N_s$ FFT successives sur des blocs de *KN* échantillons, chaque bloc étant décalé de *N*/2 échantillons par rapport au précédent. La première FFT est effectuée sur un bloc de *KN* échantillons commençant à un échantillon quelconque de la séquence, pris comme échantillon de référence. L'indice de cet échantillon est choisi conventionnellement *i*=0. Le traitement effectué ensuite est basé sur l'hypothèse que cet échantillon est le premier échantillon de la trame.

La séquence fournie par le module de mise en forme est corrélée dans le corrélateur 688 avec la séquence pseudo-aléatoire de référence, c'est-à-dire la séquence pseudo-aléatoire de décalage temporel $C_v$=0.

L'opération est répétée en incrémentant de 1 l'indice *i* de l'échantillon de référence et ce, jusqu'à ce que *i*=N/2.

Un module de traitement 689 traite les résultats de corrélation fournis par le module de corrélation pour *i*=1,...,*N*/2. Plus précisément, pour chaque valeur de *i*, le module de traitement acquiert l'amplitude A(*i*) du pic de corrélation et l'indice $j_{max}(i)$ du décalage (par rapport à la séquence de référence) correspondant à ce pic.

Le module de traitement détermine à partir de $A(i)$ et $j_{max}(i)$, *i*=1,...,*N*/2, le décalage total $\tau_{tot}^{seq}$ de la séquence pseudo-aléatoire reçue par rapport à la séquence de référence, ce décalage comprenant, d'une part, le décalage $C_v$ de la séquence initiale (autrement dit la séquence telle que transmise) et le décalage dû au retard $\tau$ entre le début de la trame et l'échantillon de référence.

Le décalage total $\tau_{tot}^{seq}$ est ensuite transmis à l'UE de manière à ce que celui-ci puisse se synchroniser par rapport à la station de base. En effet, le terminal, connaissant le décalage $C_v$, peut en déduire le retard $\tau$ et le compense à l'émission de manière à ce qu'une trame de symboles FBMC transmise par l'UE soit reçue au début d'un intervalle de réception de la station de base. Ainsi, les trames de symboles FBMC issues de différents UEs arrivent de manière synchrone à la station de base.

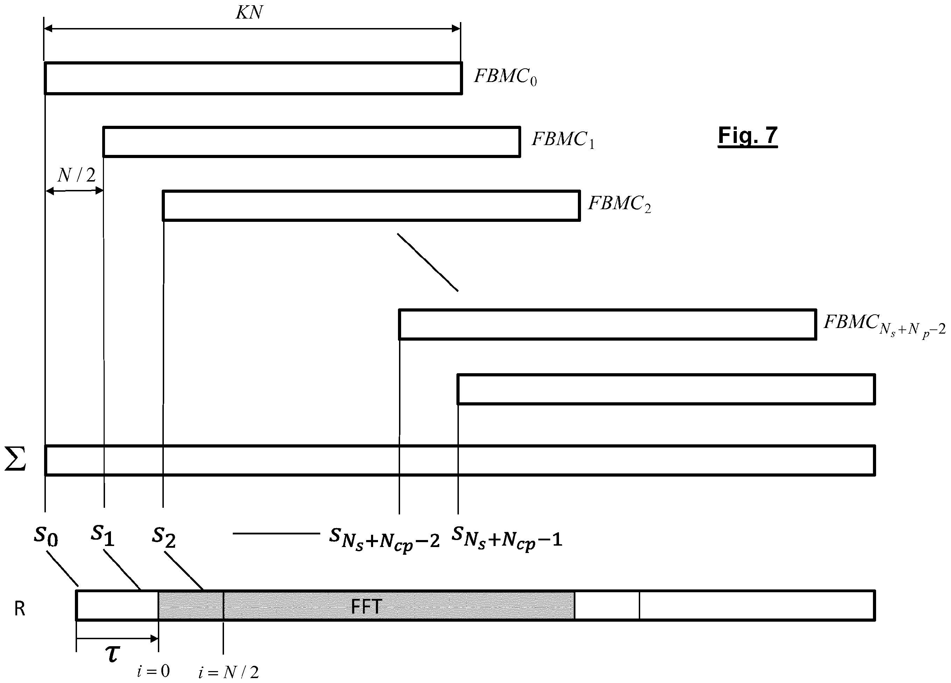

La Fig. 7 représente de manière schématique, dans le domaine temporel, une trame de symboles FBMC émise sur le canal RACH par l'émetteur de la Fig. 4 et reçue par le récepteur de la Fig. 6.

Comme indiqué en relation avec la Fig. 3, chaque symbole FBMC est constitué de $KN$ échantillons, deux symboles FBMC successifs étant décalés de $N/2$ échantillons. La sortie de l'émetteur FBMC a été désignée par $\Sigma$. On rappelle que celle-ci est obtenue par sommation de $2K$-1 symboles FBMC successifs.

Au niveau du récepteur, le signal FBMC est reçu avec un retard correspondant au temps de propagation entre l'UE et la station de base. Il a été désigné par $R$ sur la figure.

Dans la suite, on note $s_k$ le premier échantillon du $k^{\text{ème}}$ symbole FBMC, noté $FBMC_k$. On a indiqué sur la Fig. 7 le début de chacun des $N_s+N_{cp}$ symboles FBMC intervenant dans la trame du canal RACH à savoir, $s_k, k=0,...,N_s+N_{cp}$-1.

Le point de départ de la FFT glissante est pris conventionnellement à un échantillon de référence $i=0$. Ce point de départ est incrémenté jusqu'à l'échantillon $i=N/2$, pour parcourir une zone de recherche d'amplitude $N/2$. Cette amplitude de la zone de recherche assure que l'on aura nécessairement lors du balayage, une valeur de $i$ correspondant à un alignement de la fenêtre de FFT avec un symbole FBMC. Dans le cas illustré, cet alignement se produit lorsque le point de départ coïncide avec le premier échantillon du symbole $FBMC_2$, noté $s_2$.

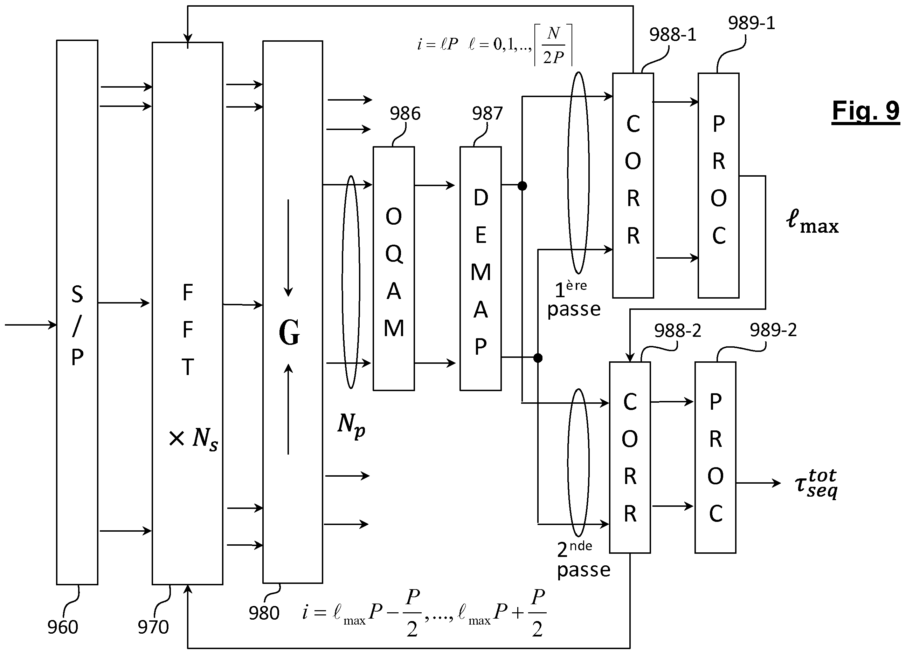

La Fig. 8 représente un ordinogramme d'une méthode de synchronisation d'un émetteur d'un système FBMC, selon un premier mode de réalisation de l'invention.

On suppose que l'émetteur présente la structure déjà décrite en relation avec la Fig. 4 et que le récepteur présente la structure déjà décrite en relation avec la Fig. 6.

La synchronisation de l'émetteur met en oeuvre les étapes 810-895 au récepteur et l'étape 897 à l'émetteur.

A l'étape 810, on initialise l'indice $i=0$.

A l'étape 820, on initialise la position de départ de la fenêtre glissante de la FFT à l'échantillon d'indice $i$. Le récepteur FBMC considère alors l'échantillon d'indice $i$ comme le premier de la séquence d'échantillons de la trame FBMC.

A l'étape 830, les $KN$ échantillons de la fenêtre glissante commençant à l'échantillon $i$ sont soumis à une FFT de taille $KN$ dans le module de FFT 670. Les échantillons en sortie de la FFT sont en outre soumis à un filtrage et un désétalement spectral dans le module 680.

A l'étape 840, on extrait les $N_p$ symboles OQAM correspondant au canal RACH.

A l'étape 850, le démodulateur 686 convertit les symboles OQAM en valeurs réelles, correspondant à des éléments de la séquence pseudo-aléatoire. Le cas échéant, on applique une décision dure sur les valeurs de la séquence pour obtenir une estimation des éléments de la séquence.

Les étapes 830 à 850 sont réalisées $N_s$ fois, en translatant à chaque fois la fenêtre de FFT de $N/2$ échantillons. Chaque itération fournit $N_p$ éléments de la séquence. On obtient ainsi un nombre $N_s.N_p$ de valeurs réelles.

A l'étape 855, le module de mise en forme 687 arrange ces valeurs réelles en mettant bout à bout les portions de séquence acquises à chaque symbole FBMC. Cette mise en forme peut être simplement réalisée en stockant les portions de séquence les unes à la suite des autres dans un buffer au fur et à mesure qu'elles sont fournies par l'étape 850.

A l'étape 860, on effectue, au moyen du corrélateur 688, une corrélation de la séquence obtenue à l'étape précédente avec la séquence de référence. On obtient ainsi une suite de valeurs $\Gamma(i,j)$ où $j$ est une position de corrélation, autrement dit un décalage de la séquence en question par rapport à la séquence de référence. La position $j$ est exprimée en nombre d'éléments de la séquence pseudo-aléatoire où $j$ varie de 0 à $L$-1 où $L$ est la longueur de la séquence de référence.

Selon une variante, on pourra à l'étape 850 prendre en compte les valeurs complexes (et non seulement les valeurs réelles) en sortie du démodulateur OQAM. Cette séquence est alors corrélée en 860 avec la séquence de référence ayant subi elle-même une modulation OQAM. La corrélation est alors effectuée sur la base du produit hermitien des deux séquences en question. Cette variante permet d'atteindre un résultat de corrélation avec un meilleur rapport signal sur bruit étant donné que l'information portée par un élément de la séquence est distribuée par le transmultiplexeur sur plusieurs sous-porteuses et instants adjacents.

A l'étape 870, le module de traitement 689 calcule une métrique du pic de corrélation et la stocke en mémoire. Avantageusement, la métrique est calculée par $A(i) = \max_j \big( \Gamma(i,j) \big).$ Elle est comparée à une valeur de seuil

$$A(i) = \frac{\max_j \big( \Gamma(i,j) \big)}{\overline{\Gamma}_i}$$

où $\overline{\Gamma}_i$ est la valeur moyenne de $\Gamma(i,j)$ sur les valeurs $j=0,...,L$-1 pour réduire de taux de fausse

$$j_{\max}(i) = \arg_j \big( \Gamma(i,j) \big| \Gamma(i,j) = A(i) \big)$$

alarme et de non détection. Dans tous les cas, l'indice de la position de corrélation pour laquelle ce pic est atteint, est également stocké en mémoire.

A l'étape 880, on vérifie si *i=N/2*. Si ce n'est pas le cas, on incrémente *i* en 885 et on retourne à l'étape 820. En revanche, si c'est bien le cas, on a parcouru la totalité de la plage de recherche [0,*N/2*] et l'on passe à l'étape 890.

A l'étape 890, le module de traitement, 689, détermine la valeur maximale, $A_{max}$, de la métrique du pic de corrélation $A(i)$ dans la plage de recherche [0,*N/2*] et récupère dans la mémoire, la position de corrélation $j_{max}(i)$ pour laquelle ce maximum est atteint, soit :

$$A_{max} = \max_{i=0,...,N/2} \left( A(i) \right) \tag{4-1}$$

$$i_{max} = \arg_i \left( A(i) \middle| A(i) = A_{max} \right) \tag{4-2}$$

$$j_{max} = j_{max}(i_{max}) \tag{4-3}$$

Le module de traitement détermine ensuite à partir de l'indice $i_{max}$ et de la position $j_{max}$ le décalage total, $\tau_{tot}^{seq}$ de la séquence comme expliqué plus loin.

A l'étape 895, le décalage total $\tau_{tot}^{seq}$, exprimé en nombre d'éléments de la séquence pseudo-aléatoire, est transmis par la station de base au terminal (UE), autrement dit par le récepteur à l'émetteur.

A l'étape 897, l'émetteur du terminal estime le retard $\tau$ à partir du décalage total $\tau_{tot}^{seq}$ et du décalage initial $C_v$, et synchronise son émission en conséquence.

Au niveau du récepteur, le retard $\tau$ est conventionnellement exprimé en nombre d'échantillons du signal reçu, la période d'échantillonnage étant *T/N*. Ce retard peut se décomposer en un multiple entier de *N/2* et une partie fractionnaire (réelle) de *N/2* :

$$\tau = \left( \tau_{ent}^s + \tau_{fract}^s \right) N/2 \tag{5}$$

où $\tau_{ent}^s = \left\lfloor \dfrac{\tau}{N/2} \right\rfloor$ est la partie entière par défaut de $\dfrac{\tau}{N/2}$, autrement dit l'indice *k* du dernier échantillon $s_k$ précédant l'échantillon de référence.

Le retard $\tau$ se traduit par un retard $\tau_{fbmc}^{seq}$ en nombre d'échantillons de la séquence pseudo-aléatoire :

$$\tau_{fbmc}^{seq} = \left( \tau_{ent}^s + \tau_{fract}^s \right) N_p \tag{6}$$

étant donné que chaque symbole FBMC porte $N_p$ échantillons de la séquence pseudo-aléatoire.

L'indice $i_{max}$ correspond à un alignement de la fenêtre glissante de la FFT avec un début de symbole FBMC (alignement sur $s_2$ en Fig. 7), autrement dit :

$$i_{max} = \tau_{fract}^s . N/2 \tag{7}$$

Lorsque la fenêtre de la FFT est alignée sur le début du symbole FBMC en question, la position du pic de corrélation résulte, d'une part, du décalage initial de la séquence pseudo-aléatoire par rapport à la séquence de référence et, d'autre part du décalage de la fenêtre de FFT par rapport au début de la trame FBMC, soit :

$$j_{max} = C_v + N_p \tau_{ent}^s \tag{8}$$

On déduit de (6),(7) et (8) le retard total de la séquence, $\tau_{tot}^{seq} = C_v + \tau_{fbmc}^{seq}$, soit :

$$\tau_{tot}^{seq} = C_v + \tau_{ent}^{s}.N_p + \tau_{fract}^{s}.N_p = j_{max} + \frac{2N_p}{N}i_{max} \qquad (9)$$

Comme déjà indiqué plus haut, le retard $\tau_{tot}^{seq}$ est transmis, à l'étape 895, au terminal (identifié par le décalage $C_v$).

A l'étape 897, l'émetteur du terminal peut alors estimer le retard $\tau$ à compenser, libellé en nombres d'échantillons :

$$\tau = \frac{N}{2N_p}\left(\tau_{tot}^{seq} - C_v\right) \qquad (10\text{-}1)$$

ou, alternativement, libellé en temps :

$$\tau = \frac{T}{2N_p}\left(\tau_{tot}^{seq} - C_v\right) \qquad (10\text{-}2)$$

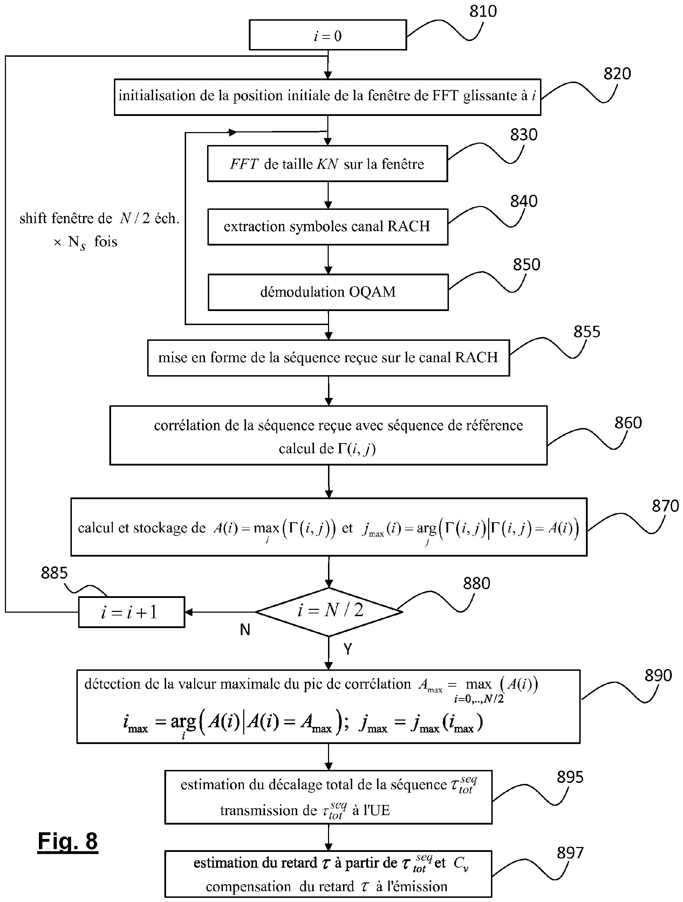

La Fig. 9 représente schématiquement la structure d'un récepteur FBMC d'un système FBMC, selon un second mode de réalisation de l'invention.

Le second mode de réalisation de l'invention diffère du premier au sens où la recherche du pic de corrélation dans la plage [0,$N$/2] se fait en deux passes successives, une première passe étant effectuée avec une résolution grossière et une seconde passe étant effectuée avec une résolution élevée autour du point trouvé dans la première passe.

Les modules portant les références 960-980, 986-987 sont identiques à ceux portant les références correspondantes 660-680, 686-687 en Fig. 6 et leur description sera par conséquent omise ici.

Les valeurs en sortie du module de mise en forme 987 font l'objet d'une première corrélation avec la séquence pseudo-aléatoire de référence dans un premier module de corrélation 988-1. A la différence du premier mode de réalisation, la première corrélation est répétée en incrémentant la position $i$ du point de départ de la FFT glissante d'un pas

$P > 1$ et ce que jusqu'à ce que $i = \left\lceil \dfrac{N}{2P} \right\rceil P$. Typiquement, $N=2^M$ et le pas $P$ est choisi tel que $P=2^m$ avec $1<m<M$-1.

Pour chaque point de départ de la FFT glissante, $i=\ell P$, avec $\ell = 0,1,..,\left\lceil \dfrac{N}{2P} \right\rceil,$ on effectue $N_s$ FFT de taille $KN$ avec un décalage de $N$/2 échantillons entre deux fenêtres successives, étant entendu que la première FFT démarre à $i$. Les valeurs de corrélation obtenues sont fournies au module de traitement 989-1. Celui-ci détermine, pour chaque

position courante $i=\ell P$ du point de départ de la FFT glissante, la valeur $A^1(\ell P) = \max_{j}\left(\Gamma\left(\ell P, j\right)\right)$ du pic de corrélation et détermine au terme du balayage la valeur maximale du pic de corrélation, soit $A_{max}^1 = \max_{\ell}\left(A_1(\ell P)\right),$ ainsi que $\ell_{max} = \arg_{\ell}\left(A_1(\ell P) \middle| A_1(\ell P) = A_{max}^1\right).$

la position du point de départ pour laquelle cette valeur maximale est atteinte L'indice $\ell_{max}$ est fourni au second module de corrélation 988-2.

Les valeurs en sortie du module de mise en forme 987 font ensuite l'objet d'une seconde corrélation dans le second module de corrélation 988-2. Cette seconde corrélation est effectuée à nouveau avec la séquence pseudo-aléatoire de référence mais cette fois l'opération de corrélation n'est répétée que sur une plage réduite de l'indice $i$, de largeur égale à un pas $P$ à savoir $i \in \left[\ell_{max}P - \dfrac{P}{2}, \ell_{max}P + \dfrac{P}{2}\right].$

Pour chaque position $i$ du point de départ de la FFT glissante, on obtient une suite de valeurs de corrélation $\Gamma(i,j)$. On comprendra que le module de corrélation 988-2 effectue les mêmes opérations que le module 688 du premier mode de réalisation mais n'opère que sur une plage de largeur $P$ centrée sur l'indice $\ell_{max}P$ déterminé par le module de traitement 989-1.

Le module de traitement 989-2 traite ensuite les résultats de corrélation fournis par le second module de corrélation 988-2. Plus précisément, il détermine pour chaque $i \in \left[ \ell_{\max} P - \dfrac{P}{2}, \ell_{\max} P + \dfrac{P}{2} \right]$ l'amplitude

$$A_{\max}^2(i) = \max_j \left( \Gamma(i, j) \right)$$ du pic de corrélation et le décalage $j_{max}(i)$ pour ce pic est atteint.

Le module de traitement 989-2 en déduit le décalage total $\tau_{tot}^{seq}$ de la séquence pseudo-aléatoire et le transmet au terminal (UE) pour compensation temporelle de son émission comme dans le premier mode de réalisation.

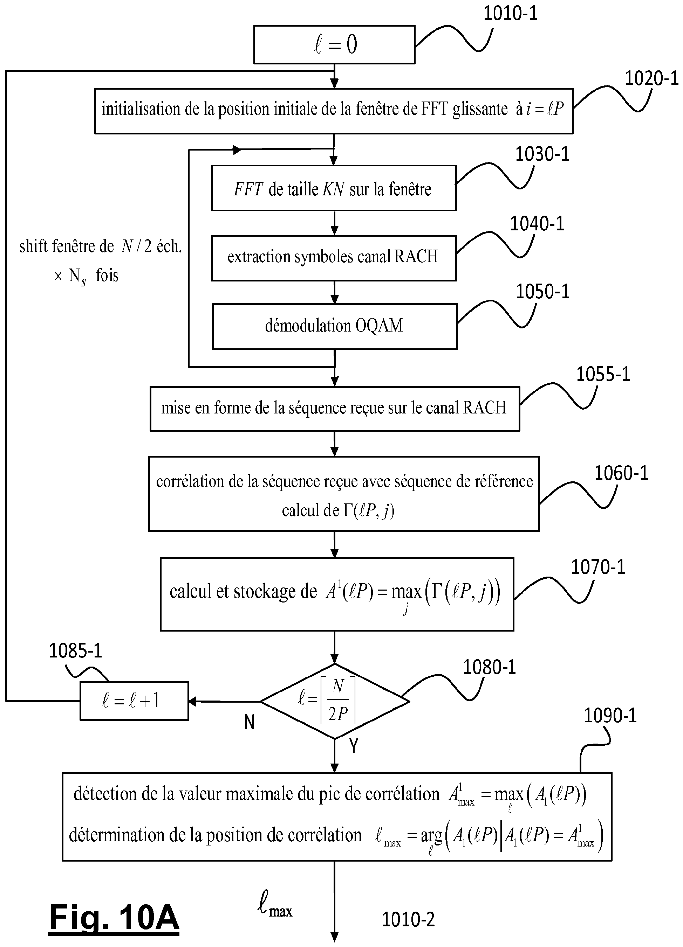

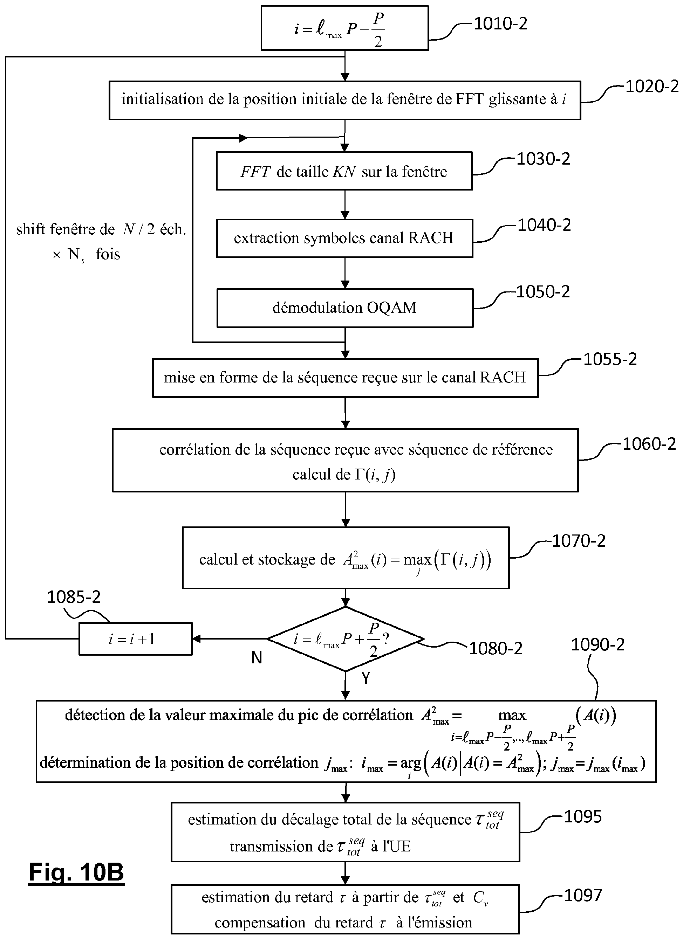

Les Fig. 10A et 10B représentent sous forme d'ordinogramme une première passe de recherche grossière et une seconde passe de recherche fine pour une méthode de synchronisation d'un émetteur d'un système FBMC, selon un second mode de réalisation de l'invention.

La méthode de synchronisation selon le second mode de réalisation utilise un récepteur comme décrit en relation avec la Fig. 9.

La synchronisation de l'émetteur met en oeuvre, une première passe de recherche grossière comprenant les étapes 1010-1 à 1090-1 exécutées au niveau du récepteur, une seconde passe de recherche fine comprenant les étapes 1010-2 à 1095, également exécutées au niveau du récepteur et enfin l'étape 1097 au niveau de l'émetteur (situé dans le terminal).

La première passe de recherche grossière est détaillée ci-après :

A l'étape 1010-1 on initialise une première boucle de recherche (grossière) avec $\ell$=0. La position initiale de la fenêtre glissante de FFT est donnée par l'indice $i$=$\ell P$ du premier échantillon de la fenêtre. Cet indice est pris conventionnellement égal à 0.

Les étapes 1020-1 à 1055-1 sont identiques aux étapes 810 à 855 déjà décrites en relation avec la Fig. 8 et ne seront donc pas détaillées plus avant.

A l'étape 1060-1, on effectue au moyen du premier module de corrélation 988-1, une corrélation de la séquence fournie par le module de mise en forme avec la séquence pseudo-aléatoire de référence. On obtient ainsi une suite de valeurs $\Gamma(\ell P, j)$, $j$=0,...,$L$-1 où $L$ est la longueur de la séquence pseudo-aléatoire et $i$=$\ell P$ est la position courante de la fenêtre.

Selon une variante, la corrélation peut être effectuée sur les valeurs complexes (et non seulement avec les valeurs réelles) de la séquence reçue avec la séquence de référence préalablement modulée par une modulation OQAM, comme expliqué en relation avec les étapes 850 et 860 de la Fig. 8.

A l'étape 1070-1, le module de traitement 989-1 calcule une métrique du pic de corrélation

$$A^1(\ell P) = \max_j \left( \Gamma(\ell P, j) \right)$$ pour la position courante de la fenêtre de FFT. On compare cette métrique à une valeur de seuil $$A^1(\ell P) = \frac{\max_j \left( \Gamma(\ell P, j) \right)}{\overline{\Gamma}_{\ell P}}$$ où $\overline{\Gamma}_{\ell P}$ est la valeur moyenne de $\Gamma(\ell P, j)$ prise sur les valeurs $j$=0,...,$L$-1 pour réduire le taux de fausse alarme et le taux de fausse détection.

A l'étape 1080-1, on vérifie si $$\ell = \left\lceil \frac{N}{2P} \right\rceil.$$ Si ce n'est pas le cas on incrémente $\ell$ de 1, ou de manière équivalente $i$ de $P$, en 1085-1 et l'on retourne à l'étape 1020-1 pour effectuer $N_s$ FFT successives à partir d'une une nouvelle position de départ. En revanche, si c'est bien le cas, on a donc balayé (avec une résolution grossière) la totalité de la plage de recherche [0,$N$/2] et l'on passe à l'étape 1090-1.

A l'étape 1090-1, le module de traitement 989-1 détermine la valeur maximale du pic de corrélation dans la plage de recherche, à savoir $$A_{\max}^1 = \max_\ell \left( A_1(\ell P) \right)$$ ainsi que l'indice $\ell_{\max}$ pour lequel cette valeur est atteinte.

La seconde passe de recherche fine est détaillée ci-après en relation avec la Fig. 10B.

On initialise en 1010-2 la seconde boucle de recherche fine avec $$i = \ell_{\max} P - \frac{P}{2}.$$

Les étapes 1020-2 à 1055-2 sont identiques aux étapes précédentes 1020-1 à 1055-1 et ne seront pas décrites à nouveau.

A l'étape 1060-2, on effectue au moyen du second module de corrélation 988-2, une corrélation de la séquence fournie par le module de mise en forme, avec la séquence pseudo-aléatoire de référence. Là encore, la variante peut être basée sur les valeurs réelles ou bien basée sur les valeurs complexes (et non seulement les valeurs réelles) de la séquence reçue comme expliqué en relation avec les étapes 850 et 860 de la Fig. 8.

Les résultats de corrélation $\Gamma(i,j)$, $j=0,...,L$-1, sont traités à l'étape suivante.

A l'étape 1070-2, le module de traitement 989-2 traite les résultats de corrélation obtenus à l'étape précédente pour déterminer la métrique du pic de corrélation $A_{\max}^2(i) = \max_j \left(\Gamma(i,j)\right)$ ou bien $A_{\max}^2(i) = \dfrac{\max_j\left(\Gamma(i,j)\right)}{\overline{\Gamma}_i}$, et le décalage $j_{\max}(i)$ pour lequel cette valeur est atteinte. La valeur de métrique $A_{\max}^2(i)$ et l'indice $j_{\max}(i)$ sont stockés en mémoire.

A l'étape 1080-2, on vérifie si $i = \ell_{\max} + \dfrac{P}{2}$. Si ce n'est pas le cas on incrémente $i$ de 1 en 1085-2 et l'on retourne à l'étape 1020-2 pour effectuer $N_s$ FFT successives à partir d'une nouvelle position de départ. En revanche, si c'est bien le cas, on a balayé la totalité de la plage de recherche fine $\left[\ell_{\max}P - \dfrac{P}{2}, \ell_{\max}P + \dfrac{P}{2}\right]$ et l'on passe à l'étape 1090-2.

A l'étape 1090-2, on détermine la valeur maximale, $A_{\max}^2$, de la métrique du pic de corrélation $A(i)$ dans la plage de recherche fine $\left[\ell_{\max}P - \dfrac{P}{2}, \ell_{\max}P + \dfrac{P}{2}\right]$ et l'on récupère dans la mémoire, la position de corrélation $j_{\max}(i)$ pour laquelle ce maximum est atteint, soit :

$$A_{\max}^2 = \max_{i=\ell_{\max}P-\frac{P}{2},..,\ell_{\max}P+\frac{P}{2}} \left(A(i)\right) \tag{11-1}$$

$$i_{\max} = \arg_i\left(A(i)\middle| A(i) = A_{\max}^2\right) \tag{11-2}$$

$$j_{\max} = j_{\max}(i_{\max}) \tag{11-3}$$

A l'étape 1095, le module de traitement 989-2 détermine ensuite le retard total de la séquence, $\tau_{tot}^{seq}$, à partir des valeurs $i_{\max}$ et $j_{\max}$, au moyen de l'expression (9). Le retard $\tau_{tot}^{seq}$ est alors transmis à l'émetteur (identifié par le décalage $C_v$).

A l'étape 1097, l'émetteur estime, à partir de $\tau_{tot}^{seq}$, le retard $\tau$ à compenser, en termes de nombre d'échantillons, au moyen de l'expression (10). Il compense son émission du retard $\tau$ pour être synchrone avec la fenêtre de réception du récepteur situé au niveau de la station de base.

On notera que le nombre d'opérations de FFT effectuées dans le premier mode de réalisation est de :

$$n_{FFT}^1 = \frac{N}{2} . N_s \tag{12-1}$$

$$n_{FFT}^2 = \left(\left\lceil\frac{N}{2P}\right\rceil + P\right)N_s \tag{12-2}$$

Dans le second mode de réalisation, on peut choisir convenablement la valeur $P$ qui minimise le nombre de

$$P = \left\lceil \sqrt{\frac{N}{2}} \right\rceil .$$

FFT. Ce minimum est obtenu en annulant la dérivée de l'expression (12-2), soit pour

L'homme du métier comprendra que d'autres modes de réalisation pourront être envisagés par l'homme du métier sans pour autant sortir du cadre de la présente invention. En particulier, pour déterminer $i_{max}$ et $j_{max}$, on pourra envisager d'effectuer une succession de passes de recherche avec des pas de résolution de plus en plus faibles. Ainsi, au lieu des deux passes de recherche des Figs. 10A et 10B, on pourrait effectuer une pluralité $Q$ de passes successives, ces $Q$ passes permettant d'affiner progressivement la détection du pic de corrélation d'amplitude maximale, la dernière de ces passes fournissant en outre la position de corrélation pour laquelle ce maximum est atteint.

## Revendications

1. Méthode de synchronisation d'un émetteur avec un récepteur d'un système FBMC, **caractérisée en ce qu'**au niveau de l'émetteur on insère une séquence pseudo-aléatoire, dans un canal d'accès défini par un intervalle de sous-porteuses d'une trame FBMC, ladite séquence pseudo-aléatoire présentant un décalage donné, $C_v$, par rapport à une séquence de référence à valeurs réelles, et qu'au niveau du récepteur :

   (a) on effectue (830) une FFT glissante du signal reçu de taille $KN$ à partir d'un échantillon de départ d'indice donné ($i$=0), la fenêtre de la FFT glissant de $N/2$ échantillons entre deux FFT successives où $N$ est le nombre de sous-porteuses d'un symbole FBMC et $K$ est le facteur de chevauchement ;
   (b) on extrait (840-855) des résultats de FFT une séquence reçue sur ledit canal et l'on corrèle (860) la séquence reçue avec la séquence pseudo-aléatoire de référence ;
   (c) on détermine (870) le pic de corrélation entre ces deux séquences et l'on stocke en mémoire, en relation avec l'indice de l'échantillon de départ, une métrique du pic de corrélation ainsi que la position de corrélation correspondant à ce pic ;
   les étapes (a),(b),(c) étant répétées pour une pluralité d'indices de l'échantillon de départ et
   (d) on détermine (890) l'indice, $i_{max}$, de l'échantillon de départ associé au pic de corrélation de métrique maximale ainsi que la position de corrélation, $j_{max}$, correspondant à ce pic de corrélation de métrique maximale ;
   (e) on détermine (895) le décalage, $\tau_{tot}^{seq}$, entre la séquence reçue et la séquence de référence à partir de l'indice $i_{max}$ et de la position de corrélation $j_{max}$, le récepteur transmettant à l'émetteur le décalage ainsi déterminé ;
   (f) l'émetteur (897) estime un retard à partir du décalage ainsi déterminé et le décalage donné, et compense ce retard à l'émission.

2. Méthode de synchronisation d'un émetteur avec un récepteur d'un système FBMC selon la revendication 1, **caractérisée en ce que** les étapes (a),(b),(c) sont répétées pour $N/2$ indices successifs de l'échantillon de départ, deux indices successifs étant séparés de 1.

3. Méthode de synchronisation d'un émetteur avec un récepteur d'un système FBMC selon la revendication 2, **caractérisée en ce qu'**à l'étape (f) le retard $\tau$ est déterminé par l'émetteur à partir de $\tau = \dfrac{N}{2N_p}\left(\tau_{tot}^{seq} - C_v\right)$ où $N_p$ est le nombre de sous-porteuses de l'intervalle de sous-porteuses dudit canal d'accès.

4. Méthode de synchronisation d'un émetteur avec un récepteur d'un système FBMC selon la revendication 1, **caractérisée en ce que** les étapes (a),(b),(c) sont répétées une première fois, lors d'une première passe de recherche, pour une première pluralité $\left\lceil \dfrac{N}{2P} \right\rceil$ d'indices de l'échantillon de départ, deux indices successifs étant séparés de $P$ où $P$ est un pas de quantification libellé en nombre d'échantillons, et que les étapes (a),(b),(c) sont répétées au moins une seconde fois, lors d'une seconde passe de recherche, pour une seconde pluralité $P$ d'indices dans la

$$\text{plage} \left[ \ell_{\max} P - \frac{P}{2}, \ell_{\max} P + \frac{P}{2} \right],$$ où $\ell_{\max}$ est un indice estimé dans la première passe de recherche.

5. Méthode de synchronisation d'un émetteur avec un récepteur d'un système FBMC selon la revendication 4, **caractérisé en ce que** l'indice $\ell_{\max}P$ est déterminé, lors de la première passe de recherche, comme celui appartenant à la première pluralité d'indices d'échantillon de départ et associé à une première valeur maximale d'une métrique du pic de corrélation $\left( A_{\max}^1 \right)$ la séquence reçue avec la séquence de référence, ladite première valeur maximale étant obtenue sur ladite première pluralité d'indices.

6. Méthode de synchronisation d'un émetteur avec un récepteur d'un système FBMC selon la revendication 5, **caractérisé en ce que**, l'indice $i_{\max}$ de l'échantillon de départ est déterminé, lors de la seconde passe de recherche, comme celui appartenant à la seconde pluralité d'indices d'échantillon de départ et associé à une seconde valeur maximale d'une métrique du pic de corrélation $\left( A_{\max}^2 \right)$ de la séquence reçue avec la séquence de référence, ladite seconde valeur maximale étant obtenue sur ladite seconde pluralité d'indices.

7. Méthode de synchronisation d'un émetteur avec un récepteur d'un système FBMC selon la revendication 6, **caractérisée en ce que** l'on détermine la position de corrélation, $j_{\max}$, correspondant au pic de corrélation d'amplitude maximale lors de la seconde passe de recherche.

8. Méthode de synchronisation d'un émetteur avec un récepteur d'un système FBMC selon la revendication 7, **caractérisée en ce que** le décalage, $\tau_{tot}^{seq}$, entre la séquence reçue et la séquence de référence est obtenu à partir de l'indice $i_{\max}$ et de la position de corrélation $j_{\max}$, tels que déterminés par la seconde passe de recherche.

9. Méthode de synchronisation d'un émetteur avec un récepteur d'un système FBMC selon la revendication 8, **caractérisé en ce que** le retard $\tau$ est déterminé par l'émetteur à partir de $$\tau = \frac{N}{2N_p} \left( \tau_{tot}^{seq} - C_v \right)$$ où $N_p$ est le nombre de sous-porteuses de l'intervalle de sous-porteuses dudit canal d'accès.

10. Méthode de synchronisation d'un émetteur avec un récepteur d'un système FBMC selon l'une des revendications précédentes, **caractérisée en ce que** ladite séquence de référence est une séquence de Gold.

**Patentansprüche**

1. Verfahren zur Synchronisation eines Senders mit einem Empfänger eines FBMC-Systems, **dadurch gekennzeichnet, dass** man im Bereich des Senders eine Pseudozufallssequenz in einen Zugriffskanal einfügt, der durch ein Intervall von Unterträgern eines FBMC-Frames definiert ist, wobei die Pseudozufallssequenz eine gegebene Verschiebung $C_v$ bezüglich einer Referenzsequenz mit reellen Werten aufweist, und dass man im Bereich des Empfängers:

(a) eine gleitende FFT des empfangenen Signals der Größe $KN$ durchführt (830) ausgehend von einer Ausgangsprobe mit gegebenem Index ($i$=0), wobei das Fenster der FFT zwischen zwei aufeinanderfolgenden FFT um $N/2$ Proben gleitet, wobei $N$ die Zahl von Unterträgern eines FBMC-Symbols ist, und $K$ der Überlappungsfaktor ist;
(b) FFT-Ergebnisse einer auf dem Kanal empfangenen Sequenz extrahiert (840-855), und man die empfangene Sequenz mit der Referenzpseudozufallssequenz korreliert (860);
(c) den Korrelationspeak zwischen diesen beiden Sequenzen bestimmt (870), und man in einem Speicher eine Korrelationspeakmetrik sowie die diesem Peak entsprechende Korrelationsposition in Relation mit dem Index der Ausgangsprobe speichert;
wobei die Schritte (a), (b), (c) für eine Mehrzahl von Indizes der Ausgangsprobe wiederholt werden, und
(d) man den Index $i_{\max}$ der Ausgangsprobe, die dem Korrelationspeak mit maximaler Metrik zugeordnet ist, sowie die Korrelationsposition $j_{\max}$, die diesem Korrelationspeak mit maximaler Metrik entspricht, bestimmt (890);

(e) man die Verschiebung $\tau_{tot}^{seq}$ zwischen der empfangenen Sequenz und der Referenzsequenz ausgehend von dem Index $i_{max}$ und der Korrelationsposition $j_{max}$ bestimmt (895), wobei der Empfänger die derart bestimmte Verschiebung an den Sender überträgt;

(f) der Sender (897) ausgehend von der derart bestimmten Verschiebung und der gegebenen Verschiebung eine Verzögerung bestimmt und diese Verzögerung beim Senden kompensiert.

2. Verfahren zur Synchronisation eines Senders mit einem Empfänger eines FBMC-Systems nach Anspruch 1, **dadurch gekennzeichnet, dass** die Schritte (a), (b), (c) für $N/2$ aufeinanderfolgende Indizes der Ausgangsprobe wiederholt werden, wobei zwei aufeinanderfolgende Indizes um 1 separiert sind.

3. Verfahren zur Synchronisation eines Senders mit einem Empfänger eines FBMC-Systems nach Anspruch 2, **dadurch gekennzeichnet, dass** die Verzögerung $\tau$ im Schritt (f) durch den Sender ausgehend von

$$\tau = \frac{N}{2N_p}\left(\tau_{tot}^{seq} - C_v\right)$$

bestimmt wird, wobei $N_p$ die Zahl von Unterträgern des Intervalls von Unterträgern des Zugriffskanals ist.

4. Verfahren zur Synchronisation eines Senders mit einem Empfänger eines FBMC-Systems nach Anspruch 1, **dadurch gekennzeichnet, dass** die Schritte (a), (b), (c) ein erstes Mal wiederholt werden während eines ersten Suchdurchgangs für eine erste Mehrzahl $\left\lceil \dfrac{N}{2P} \right\rceil$ von Indizes der Ausgangsprobe, wobei zwei aufeinanderfolgende Indizes um $P$ separiert sind, wobei $P$ ein in einer Zahl von Proben ausgedrückter Quantisierungsschritt ist, und dass die Schritte (a), (b), (c) wenigstens ein zweites Mal wiederholt werden während eines zweiten Suchdurchgangs für eine zweite Mehrzahl $P$ von Indizes in dem Bereich $\left[\ell_{max}P - \dfrac{P}{2}, \ell_{max}P + \dfrac{P}{2}\right]$, wobei $\ell_{max}$ ein Index ist, der im ersten Suchdurchgang abgeschätzt wird.

5. Verfahren zur Synchronisation eines Senders mit einem Empfänger eines FBMC-Systems nach Anspruch 4, **dadurch gekennzeichnet, dass** der Index $\ell_{max}P$ bestimmt wird während des ersten Suchdurchgangs als derjenige, der zur ersten Mehrzahl von Indizes der Ausgangsprobe gehört und einem ersten Maximalwert einer Metrik des Korrelationspeaks $\left(A_{max}^1\right)$ der empfangenen Sequenz mit der Referenzsequenz zugeordnet ist, wobei der erste Maximalwert auf der ersten Mehrzahl von Indizes erhalten wird.

6. Verfahren zur Synchronisation eines Senders mit einem Empfänger eines FBMC-Systems nach Anspruch 5, **dadurch gekennzeichnet, dass** der Index $i_{max}$ der Ausgangsprobe bestimmt wird während des zweiten Suchdurchgangs als derjenige, der zur zweiten Mehrzahl von Indizes der Ausgangsprobe gehört und einem zweiten Maximalwert einer Metrik des Korrelationspeaks $\left(A_{max}^2\right)$ der empfangenen Sequenz mit der Referenzsequenz zugeordnet ist, wobei der zweite Maximalwert auf der zweiten Mehrzahl von Indizes erhalten wird.

7. Verfahren zur Synchronisation eines Senders mit einem Empfänger eines FBMC-Systems nach Anspruch 6, **dadurch gekennzeichnet, dass** man die Korrelationsposition $j_{max}$ entsprechend dem Korrelationspeak mit maximaler Amplitude während des zweiten Suchdurchgangs bestimmt.

8. Verfahren zur Synchronisation eines Senders mit einem Empfänger eines FBMC-Systems nach Anspruch 7, **durch gekennzeichnet, dass** die Verschiebung $\tau_{tot}^{seq}$ zwischen der empfangenen Sequenz und der Referenzsequenz erhalten wird ausgehend vom Index $i_{max}$ der Korrelationsposition $j_{max}$, wie durch den zweiten Suchdurchgang bestimmt.

9. Verfahren zur Synchronisation eines Senders mit einem Empfänger eines FBMC-Systems nach Anspruch 8, **da-**

**durch gekennzeichnet, dass** die Verzögerung $\tau$ durch den Sender bestimmt wird ausgehend von

$$\tau = \frac{N}{2N_p}\left(\tau_{tot}^{seq} - C_v\right),$$

wobei $N_p$ die Zahl von Unterträgern des Intervalls von Unterträgern des Zugriffskanals ist.

10. Verfahren zur Synchronisation eines Senders mit einem Empfänger eines FBMC-Systems nach einem der vorhergehenden Ansprüche, **dadurch gekennzeichnet, dass** die Referenzsequenz eine Gold-Sequenz ist.

**Claims**

1. Method for synchronising an emitter with a receiver of an FBMC system, **characterised in that** on the emitter a pseudo-random sequence is inserted, in an access channel defined by an interval of subcarriers of an FBMC frame, said pseudo-random sequence having a given offset, $C_v$, with respect to a reference sequence with real values, and that at the level of the receiver:

   (a) a sliding FFT of the received signal of size $KN$ is carried out (830) using a starting sample with a given index ($i$=0), with the window of the FFT sliding by $N/2$ samples between two successive FFT where $N$ is the number of subcarriers of an FBMC symbol and $K$ is the overlapping factor;
   (b) a sequence received on said channel is extracted (840-855) from the FFT results and the sequence received is correlated (860) with the reference pseudo-random sequence;
   (c) the correlation peak between these two sequences is determined (870) and, with respect to the index of the starting sample, a metric of the correlation peak is stored in memory as well as the correlation position that corresponds to this peak;
   with the steps (a), (b), (c) being repeated for a plurality of indexes of the starting sample and
   (d) the index, $i_{max}$, of the starting sample associated with the correlation peak of the maximum metric is determined (890) as well as the correlation position, $j_{max}$, corresponding to this maximum metric correlation peak;
   (e) the offset, $\tau_{tot}^{seq}$, is determined (895) between the sequence received and the reference sequence using the index $i_{max}$ and the correlation position $j_{max}$, with the receiver transmitting to the emitter the offset determined as such;
   (f) the emitter (897) estimates a delay using the offset determined as such and the given offset, and compensates this delay at the emission.

2. Method for synchronising an emitter with a receiver of an FBMC system according to claim 1, **characterised in that** the steps (a), (b), (c) are repeated for $N/2$ successive indexes of the starting sample, with two successive indexes being separated by 1.

3. Method for synchronising an emitter with a receiver of an FBMC system according to claim 2, **characterised in that** in step (f) the delay $\tau$ is determined by the emitter using $\tau = \frac{N}{2N_p}\left(\tau_{tot}^{seq} - C_v\right)$ where $N_p$ is the number of subcarriers of the interval of subcarriers of said access channel.

4. Method for synchronising an emitter with a receiver of an FBMC system according to claim 1, **characterised in that**
   the steps (a), (b), (c) are repeated a first time, during a first search pass, for a first plurality $\left\lceil \frac{N}{2P} \right\rceil$ of indexes of the starting sample, with two successive indexes being separated by $P$ where $P$ is a quantification step denominated in number of samples, and the steps (a), (b), (c) are repeated at least a second time, during a second search pass, for a second plurality $P$ of indexes in the range

   $$\left[\ell_{max}P - \frac{P}{2}, \ell_{max}P + \frac{P}{2}\right],$$

   where $\ell_{max}$ is an estimate index in the first search pass.

5. Method for synchronising an emitter with a receiver of an FBMC system according to claim 4, **characterised in that** the index $\ell_{max}P$ is determined, during the first search pass, as the one belonging to the first plurality of starting sample indexes and associated with a first maximum value of a metric of the correlation peak $\left( A_{\max}^{1} \right)$ of the sequence received with the reference sequence, with said first maximum value being obtained on said first plurality of indexes.

6. Method for synchronising an emitter with a receiver of an FBMC system according to claim 5, **characterised in that**, the index $i_{\max}$ of the starting sample is determined, during the second search pass, as the one belonging to the second plurality of starting sample indexes and associated with a second maximum value of a metric of the correlation peak $\left( A_{\max}^{2} \right)$ of the sequence received with the reference sequence, with said second maximum value being obtained on said second plurality of indexes.

7. Method for synchronising an emitter with a receiver of an FBMC system according to claim 6, **characterised in that** the correlation position, $j_{\max}$, corresponding to the correlation peak of maximum amplitude during the second search pass, is determined.

8. Method for synchronising an emitter with a receiver of an FBMC system according to claim 7, **characterised in that** the offset, $\tau_{tot}^{seq}$, between the sequence received and the reference sequence is obtained using the index $i_{\max}$ and the correlation position $j_{\max}$, such as determined by the second search pass.

9. Method for synchronising an emitter with a receiver of an FBMC system according to claim 8, **characterised in that**

$$\tau = \frac{N}{2N_p}\left( \tau_{tot}^{seq} - C_v \right)$$

the delay $\tau$ is determined by the emitter using  where $N_p$ is the number of subcarriers of the interval of subcarriers of said access channel.

10. Method for synchronising an emitter with a receiver of an FBMC system according to one of the preceding claims, **characterised in that** said reference sequence is a Gold sequence.

$x_0[n]$ $d_0[n]$

$x_1[n]$ $d_1[n]$

$x_{N-1}[n]$ $d_{N-1}[n]$

110

120 **G**

130 **I F F T**

140 **C O M B F B M C**

150

160 **S / P**

170 **F F T**

180 **G**

190

$\hat{x}_0[n]$

$\hat{x}_1[n]$

$\hat{x}_{N-1}[n]$

*KN*

*KN*

**Fig. 1**

EP 3 220 592 B1

**Fig. 2A**

Inputs: $d_i[n]$, $d_{i+1}[n]$, $d_{i+2}[n]$

Multiplier outputs:

$G_3 d_i[n] + G_1 d_{i-1}[n]$

$G_2 d_i[n] + G_2 d_{i-1}[n]$

$G_1 d_i[n] + G_3 d_{i-1}[n]$

$G_0 d_i[n]$

$G_1 d_i[n] + G_3 d_{i+1}[n]$

$G_2 d_i[n] + G_2 d_{i+1}[n]$

$G_3 d_i[n] + G_1 d_{i+1}[n]$

$G_0 d_{i+1}[n]$

$G_3 d_{i+2}[n] + G_1 d_{i+1}[n]$

$G_2 d_{i+2}[n] + G_2 d_{i+1}[n]$

$G_1 d_{i+2}[n] + G_3 d_{i+1}[n]$

$G_0 d_{i+2}[n]$

$G_1 d_{i+2}[n] + G_3 d_{i+3}[n]$

$G_2 d_{i+2}[n] + G_2 d_{i+3}[n]$

$G_3 d_{i+2}[n] + G_1 d_{i+3}[n]$

**Fig. 2B**

Outputs: $d_i^r[n]$, $d_{i+1}^r[n]$, $d_{i+2}^r[n]$

Groups: $d_{i,k}^r[n]$, $d_{i+1,k}^r[n]$, $d_{i+2,k}^r[n]$

Fig. 3

**Fig. 4**

EP 3 220 592 B1

**Fig. 5**

Fig. 6

**Fig. 7**

EP 3 220 592 B1

**Fig. 9**

$$i = \ell P \quad \ell = 0,1,..,\left\lceil \frac{N}{2P} \right\rceil$$

$$i = \ell_{max} P - \frac{P}{2},...,\ell_{max} P + \frac{P}{2}$$

$\ell_{max}$

$\tau_{seq}^{tot}$

EP 3 220 592 B1

**Fig. 8**

$$\ell = 0$$ 1010-1

initialisation de la position initiale de la fenêtre de FFT glissante à $i = \ell P$ 1020-1

*FFT* de taille $KN$ sur la fenêtre 1030-1

extraction symboles canal RACH 1040-1

démodulation OQAM 1050-1

shift fenêtre de $N/2$ éch. $\times N_S$ fois

mise en forme de la séquence reçue sur le canal RACH 1055-1

corrélation de la séquence reçue avec séquence de référence calcul de $\Gamma(\ell P, j)$ 1060-1

calcul et stockage de $A^1(\ell P) = \max_{j}\left(\Gamma\left(\ell P, j\right)\right)$ 1070-1

1085-1

$$\ell = \ell + 1$$

N

$$\ell = \left\lceil \dfrac{N}{2P} \right\rceil$$ 1080-1

Y

détection de la valeur maximale du pic de corrélation $A^1_{max} = \max_{\ell}\left(A_1(\ell P)\right)$

détermination de la position de corrélation $\ell_{max} = \arg_{\ell}\left(A_1(\ell P)\big| A_1(\ell P) = A^1_{max}\right)$ 1090-1

## Fig. 10A

$\ell_{max}$

1010-2

$$i = \ell_{max} P - \frac{P}{2}$$ 1010-2

initialisation de la position initiale de la fenêtre de FFT glissante à $i$ — 1020-2

*FFT* de taille *KN* sur la fenêtre — 1030-2

extraction symboles canal RACH — 1040-2

démodulation OQAM — 1050-2

shift fenêtre de $N/2$ éch.
$\times N_s$ fois

mise en forme de la séquence reçue sur le canal RACH — 1055-2

corrélation de la séquence reçue avec séquence de référence
calcul de $\Gamma(i,j)$ — 1060-2

calcul et stockage de $A^2_{max}(i) = \max_j \left( \Gamma(i,j) \right)$ — 1070-2

1085-2

$i = i+1$ ◄— N —◄ $i = \ell_{max} P + \frac{P}{2}$? — 1080-2    1090-2

Y

détection de la valeur maximale du pic de corrélation $A^2_{max} = \max\limits_{i=\ell_{max}P-\frac{P}{2},..,\ell_{max}P+\frac{P}{2}} \left( A(i) \right)$

détermination de la position de corrélation $j_{max}$: $i_{max} = \arg\limits_i \left( A(i) \big| A(i) = A^2_{max} \right)$; $j_{max} = j_{max}(i_{max})$

estimation du décalage total de la séquence $\tau^{seq}_{tot}$
transmission de $\tau^{seq}_{tot}$ à l'UE — 1095

**Fig. 10B**

estimation du retard $\tau$ à partir de $\tau^{seq}_{tot}$ et $C_v$
compensation du retard $\tau$ à l'émission — 1097

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE B. HIROSAKI.** An orthogonally multiplexed QAM system using the discrète Fourier transform. *IEEE Trans on Comm.,* Juillet 1981, vol. 29 (7), 982-989

- **DE P. SIOHAN et al.** Analysis and design of OFDM/OQAM systems based on filterbank theory. *IEEE Trans. on signal processing,* Mai 2002, vol. 50 (5), 1170-1183